# EUROPEAN PATENT APPLICATION

(11) **EP 3 834 930 A1**
(43) Date of publication of application: **16.06.2021**
(21) Application number: 19214691.8
(22) Date of filing: 10.12.2019
(51) Int. Cl.: B01J 29/068, B01J 29/40, B01J 29/44, B01J 35/00, C01B 39/40

(54) **METHOD OF PREPARATION OF MFI ZEOLITES WITH ENCAPSULATED METAL NANOPARTICLES**

(71) Applicant: Charles University, Faculty of Science, 11636 Praha 1 (CZ)
(72) Inventor: Zhang, Yuyan, 12800 Praha 2 (CZ); Mazur, Michal, 14700 Praha 4 (CZ); Kubu, Martin, 10700 Praha 10 (CZ); Cejka, Jiri, 41301 Roudnice nad Labem (CZ)
(74) Representative: Hartvichova, Katerina

(57) **Abstract**

The present invention provides a method for preparation of MFI zeolites with encapsulated metal nanoparticles, wherein the metal is selected from Pt, Pd, Au and mixtures thereof, said method comprising the following steps:
a) contacting at least one metal salt or complex, wherein the metal is selected from Pt, Pd, Au and mixtures thereof, with an alkoxysilane functionalized ionic liquid, in aqueous solvent, to form a first mixture;
b) contacting a source of silica, alkali metal hydroxide, a structure-directing agent and optionally a source of alumina,, in aqueous solvent, to form a second mixture;
c) combining the first mixture and the second mixture to form a third mixture;
d) subjecting the third mixture to drying;
e) subjecting the dried third mixture to hydrothermal crystallization to form the MFI zeolites with encapsulated metal nanoparticles.

The method allows to prepare the metal-loaded MFI zeolites with reproducible metal loading, structural characteristics, in a simple, effective and reliable way.

## Description

### Field of Art

The present invention relates to a method of preparation of MFI zeolites with encapsulated metal nanoparticles.

### Background Art

Zeolites are crystalline aluminosilicates comprising tetrahedral connected three-dimensional frameworks, which possess orderly distributed micropores with the diameter of nanometer size (Y. Li and J. Yu, Chem. Rev., 2014, 114, 7268-7316). Compared with other support materials, zeolites exhibit high thermal and chemical stability under harsh reaction conditions.

Zeolite having MFI type framework was invented by Mobil Oil Corporation in 1972 and denoted as ZSM-5 material, which is a medium pore zeolite with channels defined by ten-membered rings. The estimated pore size of MFI is 5.6 × 5.3 Å, 5.5 × 5.1 Å. It belongs to the pentasil family of zeolites, and its chemical formula is NaₙAlₙSi₉₆₋ₙO₁₉₂· 16H₂O (n<27). Due to its properties this type of zeolite is widely used in the petroleum industry as a heterogeneous catalyst, mainly in isomerization of hydrocarbons (E. G. Derouane and Z. Gabelica, J. Solid State Chem., 1986, 64, 296-304).

It is known to prepare zeolites, including MFI, using silicate ionic liquids as substrates in the synthesis (E. R. Cooper, C. D. Andrews, P. S. Wheatley, P. B. Webb, P. Wormald and R. E. Morris, Nature, 2004, 430, 1012-1016). Ionic liquids are a class of purely ionic, salt-like materials that are liquid below 100 °C. Alkoxysilane functional ionic liquids are prepared by standard quaternization methods from alkyl imidazole or amine or guanidine (e.g., C1-C6 alkyls) and functionalized alkyl halides connecting alkoxysilane.

Zeolite-confined noble metals are an important class of catalysts (S.-M. Wu, X.-Y. Yang and C. Janiak, Angew. Chemie Int. Ed., 2019, 58, 12340-12354). Metal-doped MFI zeolite catalysts (commonly designated as "metal@MFI", wherein metals are noble metals, typically Pt, Pd, or Au) are known in the art. In particular, metal nanoparticles (NPs) are encapsulated within cavities and channels of MFI zeolite framework (Pt@MFI, Pd@MFI, and Au@MFI). When metal nanoparticles are formed and grown inside MFI zeolite framework, they become well confined in the space and generally too large to escape from pore cavities, thus preventing the aggregation and leaching of the metal nanoparticles.

Metal@MFI catalysts can be synthesized by direct hydrothermal crystallization from a reaction mixture containing a source of silica, a source of alumina, a structure-directing agent, alkali metal hydroxide, and a metal precursor. However, metal precursors easily precipitate as bulk hydroxides in alkaline synthetic gels and the synchronization of creation of nanoparticles with zeolite crystallization is limited. Therefore, a general strategy for producing metal nanoparticles encapsulated within zeolite framework through direct hydrothermal crystallization is to develop protective agents stabilizing metal precursors against precipitation. Up to date mercaptosilanes or organic amine ligands can be used to prevent precipitation of metal precursors during direct hydrothermal crystallization process.

Mercaptosilane can be used to prevent precipitation of metal precursors during direct hydrothermal crystallization process. The mercapto group of the mercaptosilane binds strongly to the metal (Pt, Pd, Au) ion to form stable metal-sulfur products, while the alkoxysilane moiety forms Si-O-Si and/or Si-O-Al bonds and promotes the condensation of silicate structure. However, sulphur could act as a poison and may decrease the catalytic activity.

NH3 and organic amine ligands can act as coordinating agents to stabilize metal precursors and prevent their precipitation under hydrothermal crystallization conditions. However, those complexes are less stable than mercaptosilanes, which results in low yields and limits the synthesis of final metal@ zeolite products.

Silica or zeolites can also be used to stabilize metal precursors during direct hydrothermal crystallization process. In these methods, metal precursors are first trapped in the silica/zeolite matrix by forming metal oxide or metal hydroxide nanoparticles. During the crystallization process, silica/zeolite-embedded metal precursors are sequentially consumed, and metal oxide nanoparticles or metal hydroxides are simultaneously confined within zeolite frameworks. However, this method involves two steps of incorporation of metal precursors.

The methods known in the art for producing metal @MFI zeolite products suffer from the above described drawbacks. Thus, there exists a need for developing a simple, effective, reliable and robust method for producing MFI zeolites with encapsulated metal nanoparticles using direct hydrothermal crystallization.

### Disclosure of the Invention

The present invention provides a method for preparation of MFI zeolites with encapsulated metal (Pt, Pd, and/or Au) nanoparticles, comprising the following steps:
a) contacting at least one metal salt or complex, wherein the metal is selected from Pt, Pd, Au and mixtures thereof, with an alkoxysilane functionalized ionic liquid, in aqueous solvent, to form a first mixture;
b) contacting a source of silica, alkali metal hydroxide, a structure-directing agent and optionally a source of alumina, in aqueous solvent, to form a second mixture;
c) combining the first mixture and the second mixture to form a third mixture;
d) subjecting the third mixture to drying;
e) subjecting the dried third mixture to hydrothermal crystallization to form the MFI zeolites with encapsulated metal nanoparticles.

In the present invention, the ionic liquid acts as a stabilizer of the metal salt or complex which prevents undesirable aggregation and precipitation. To this end, the ionic liquid is combined with the metal salt or complex prior to its contacting with the zeolite-forming gel (the second mixture). Thus, stabilized structures are formed, which are maintained for the necessary time during further technological steps, and allow to convert the metal into metal nanoparticles in a predictable and reproducible manner, i.e., the use of ionic liquid allows to control metal loading (the amount of metal precursor used for synthesis corresponds to the final loading in the product). Introduction of the metal species is realized by direct synthesis that reduces the number of steps and does not require post-synthesis treatment. Synthesis is reproducible and products can be prepared in terms of Si/Al ratio, metal loading, and textural properties (BET surface areas, total pore volumes, micropore volumes) in a reproducible way. Furthermore, the ionic liquids are non-toxic, and there is no risk of poisoning the product. The preparation procedure is simple and straightforward.

MFI is a medium pore zeolite with channels defined by ten-membered rings. The estimated pore size of MFI is 5.6 × 5.3 Å, 5.5 × 5.1 Å. It belongs to the pentasil family of zeolites, and its chemical formula is preferably NaₙAlₙSi₉₆₋ₙO₁₉₂·16H₂O (n<27). In a preferred embodiment, the MFI zeolite or MFI zeotype molecular sieves are selected from the group consisting of ZSM-5, silicalite, TS-1, AZ-1, Bor-C, boralite C, encilite, FZ-1, LZ-105, monoclinic H-ZSM-5, mutinaite, NU-4, NU-5, TSZ, TSZ-III, TZ-01, USC-4, USI 108, ZBH and ZKQ-1B (more information about the herein listed individual materials of the MFI type can be found at https://europe.iza-structure.org/IZA-SC/material rm.php?STC=MFI).

Metal nanoparticles are understood as platinum (Pt), palladium (Pd) or gold (Au) (or combination thereof) particles having at least one dimension within the range 0.1-100 nanometers. Preferably, metal nanoparticles have all dimensions within the range 0.1-100 nanometers. More preferably, nanoparticles of the present invention have all dimensions within the range 0.1-10 nanometers. Even more preferably, nanoparticles of the present invention have the size D0.9 (i.e., 90% of the particles) within the range 0.1-5 nanometers.

Encapsulation of metal nanoparticles is an introduction of the metal species of nanometer dimensions (up to 100 nm) into the zeolite matrix to obtain stabilized metal species within zeolitic frameworks.

MFI zeolites with encapsulated metal nanoparticles are referred herein as metal@MFI, or in case of individual metals as Pt@MFI, Pd@MFI and Au@MFI, respectively.

The metal salt or complex acts as a precursor of the metal nanoparticles. The metal salts or complexes should be water-soluble (in the temperature range of 10 to 70 °C). Preferably, the metal salts or complexes are selected from: potassium tetrachloroplatinate(II), chloroplatinic acid, ammonium hexachloroplatinate(IV), ammonium tetrachloroplatinate(II), sodium hexachloroplatinate(IV), sodium tetrachloroplatinate(II), ammonium tetrachloropalladate(II), sodium tetrachloropalladate(II), ammonium hexachloropalladate(IV), potassium tetrachloropalladate(II), sodium tetrachloropalladate(II), potassium hexachloropalladate(IV), potassium hexachloropalladate(IV); sodium tetrachloroaurate(III), gold(III) chloride, potassium tetrachloroaurate(III), potassium tetrabromoaurate(III), ammonium tetrachloroaurate(III), and hydrates and/or solvates thereof.

Alkoxysilane functionalized ionic liquid is an ionic liquid comprising a cation selected from:
- imidazolium ion of formula (I) 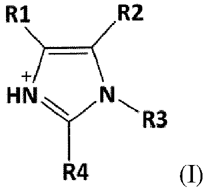 wherein each of R1-R4 is independently selected from C1-C6 alkyls;
- ammonium ion of formula (II) 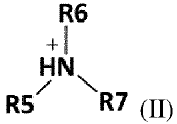 wherein each of R5-R7 is independently selected from C1-C6 alkyls;
- guanidinium ion of formula (III) 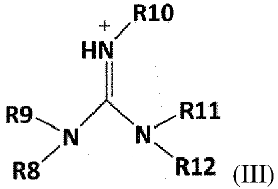 wherein each of R8-R12 is independently selected from C1-C6 alkyls;
   and
- an anion of formula (IV), 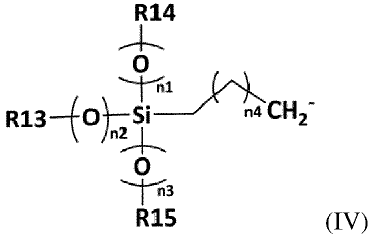 wherein each of R13, R14, R15 is independently selected from C1-C6 alkyls, each of n1, n2, n3 is 0 or 1, wherein at least one of n1, n2, n3 is 1, and n4 is an integer from 0 to 5.

Sources of silica are known to a person skilled in the art; suitable sources of silica are listed, e.g., in Y. Li and J. Yu, Chem. Rev., 2014, 114, 7268-7316. Preferably, the source of silica is selected from tetraethyl orthosilicate, colloidal silica, fumed silica, silicon dioxide, silicon dioxide nanopowder (D50 NMT 100 nm), AEROSIL®380 (AEROSIL®380 is a hydrophilic fumed silica with a specific surface area in the range of 350-410 m²/g) and mixtures thereof. A particularly preferred source of silica is tetraethyl orthosilicate.

Sources of alumina are known to a person skilled in the art; suitable sources of alumina are listed, e.g., in Y. Li and J. Yu, Chem. Rev., 2014, 114, 7268-7316. Preferably, the source of alumina is selected from aluminum nitrate nonahydrate, sodium aluminate, aluminum sulfate, aluminum hydroxide hydrate and mixtures thereof. A particularly preferred source of alumina is aluminum nitrate nonahydrate.

Structure directing agents are known to a person skilled in the art; suitable structure directing agents are listed, e.g., in E. G. Derouane and Z. Gabelica, J. Solid State Chem., 1986, 64, 296-304. Preferably, structure directing agent is selected from tetrapropylammonium hydroxide, tetrabutylammonium hydroxide, tetramethylammonium hydroxide, bis-1,5(tripropylammonium) pentamethylene diiodide and mixtures thereof. A particularly preferred structure directing agent is tetrapropylammonium hydroxide.

Alkali metal hydroxide acts as a pH adjusting agent, and it is preferably selected from sodium hydroxide, potassium hydroxide and a mixture thereof.

In step a), the contacting of at least one metal salt or complex, wherein the metal is selected from Pt, Pd, Au, with an alkoxysilane functionalized ionic liquid is carried out preferably in water as the aqueous solvent. In some embodiments, the molar ratios of individual components of the mixture are metal salt(s) or complex(es) : alkoxysilane functionalized ionic liquid : water = 0.35-3 : 7-60 : 1230-10000. Water is preferably deionized water.

In step b), the source of silica, (optionally) the source of alumina and the structure-directing agent are preferably combined in water as the aqueous solvent, and in the presence of an alkali metal hydroxide. Alumina to silica molar ratio is in the range of 0 - 1. Preferably, the molar ratios of the components are within the following ranges: source of silica : source of alumina : sodium hydroxide : structure-directing agent: water = 1 : 0-0.2 : 0.02-0.10 : 0.1-0.4 : 1-300.

Delay between the steps of formation of the first mixture and of the second mixture and the step of combining the two mixtures to form a third mixture is advantageously at least 6 hours. In other words, the first mixture and the second mixture are each left separately to age for at least 6 hours. Preferably, the first mixture is left to stand for 1-3 days (preferably at the temperature range of 20-40 °C), and the second mixture (which is a gel) is aged for 12-48 hours.

In step c), the third mixture (consisting of the first mixture and the second mixture, preferably combined in the weight ratio in the range of 0.01 - 100) is preferably stirred for 2 to 10 hours, more preferably at a temperature within the range of 20-40 °C.

The drying procedure in step d) may preferably be carried out by first freezing the third mixture to a temperature below -150 °C (for example, using liquid nitrogen), and freeze-drying it for at least 8 hours, preferably for 12 to 24 hours.

After drying (step d)) and prior to hydrothermal crystallization (step e)), the third mixture may be ground to a powder (D90 NMT 200 µm).

In the hydrothermal crystallization step e), the dried third mixture is preferably kept at a temperature within the range of 140 °C to 170 °C, under autogenic pressure (in the range of 5 to 20 atm) for at least 24 hours, preferably for 2 to 6 days. The hydrothermal crystallization may be carried out, for example, in a glass vial, in an autoclave.

The hydrothermal crystallization may be quenched for example by cold water (laboratory temperature or colder), and the product may be washed with deionized water, dried (for example, at a temperature ranging from 50 to 80 °C), and calcined in a furnace at temperatures ranging from 500 to 700 °C, with a temperature rate ranging from 1 °C to 10 °C/min and with a heating time ranging from 4-8 hours.

The alkoxysilane functionalized ionic liquid to be used in step a) may be prepared by reacting a quaternizable amine selected from
- imidazole derivative of formula (Ia) 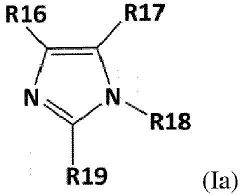 wherein each of R16-R19 is independently selected from C1-C6 alkyls,
- tertiary amine of formula (IIa) 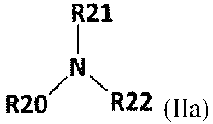 wherein each of R20-R22 is independently selected from C1-C6 alkyls,
- guanidine derivative of formula (IIIa) 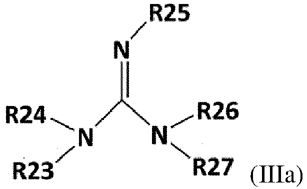 wherein each of R23-R27 is independently selected from C1-C6 alkyls;
   with an alkoxysilanealkyl halide of formula (IVa) 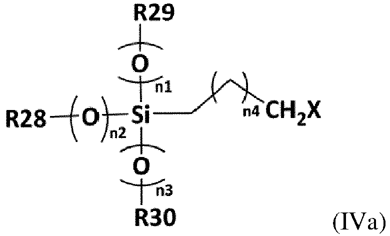
   wherein each of R28-R30 is independently selected from C1-C6 alkyls,
   each of n1, n2, n3 is 0 or 1, wherein at least one of n1, n2, n3 is 1,
   n4 is an integer from 0 to 5,
   and X is selected from Cl, Br, I, F (preferably from Cl and Br).

The reaction of preparation of the ionic liquid may preferably be carried out under inert atmosphere such as N2 or Ar at 60 to 90 °C for 12 to 36 hours, followed by precipitation in diethyl ether at temperature range from 10 to 20 °C, then drying in a vacuum oven (pressure range from 1 kPa to 50 kPa) at temperature range from 20 to 40 °C for 12 to 24 hours.

Metal precursors are stabilized against precipitation as hydroxides during zeolite crystallization using alkoxysilane functionalized ionic liquid. The cationic components of the ionic liquid bind to anionic metal precursor centers *via* electrostatic interactions, whereas the alkoxysilane moieties promote compatibility between zeolite nucleation and metal precursors. During the direct hydrothermal crystallization process, stabilized metal precursors can be synchronized with the growth of MFI zeolite. Thanks to this invention, metal nanoparticles are encapsulated within MFI zeolite framework, having the metal loading mentioned above.

The invention thus includes the step of stabilizing metal (Pt, Pd, Au) precursors within alkoxysilane functionalized ionic liquid prior to direct hydrothermal crystallization of MFI zeolite. In the resulting product of the method of the invention, metal nanoparticles are encapsulated within MFI zeolite. For example, the following loadings can easily be achieved by the synthetic protocol of the invention:
- Pt loading in Pt@MFI catalysts varying from 0.30 wt% to 1.14 wt%
- Pd loading in Pd@MFI catalysts varying from 0.25 wt% to 1.08 wt%
- Au loading in Au@MFI catalysts varying from 0.21 wt% to 1.20 wt%

### Brief Description of Drawings

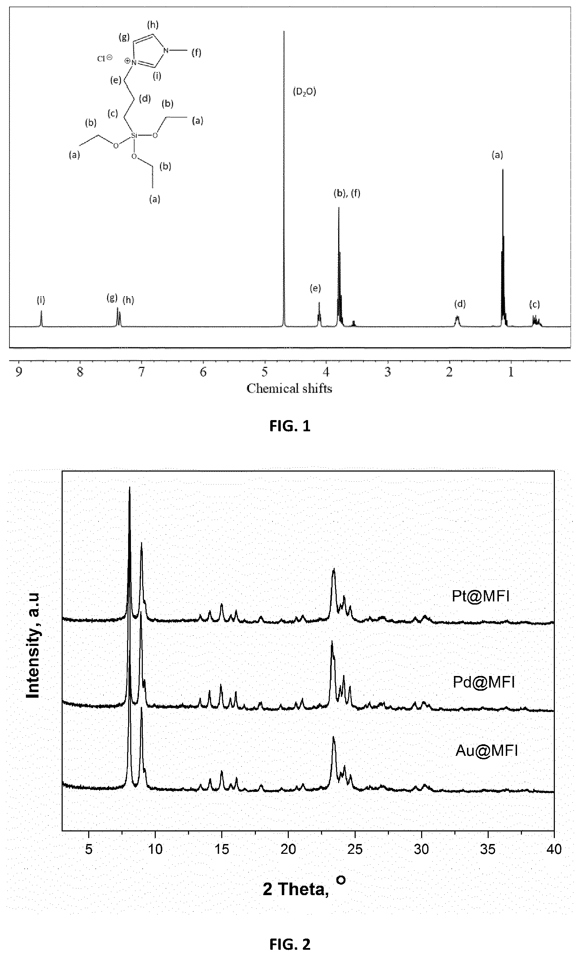

FIG. 1 shows the NMR of the 1-methyl-3-(triethoxysilyl propyl) imidazolium chloride.
FIG. 2 shows the XRD patterns of the Pt@MFI (Example 1), Pd@MFI (Example 2) and Au@MFI (Example 3) catalysts synthesized by direct hydrothermal crystallization in the presence of 1-methyl-3-(triethoxysilyl propyl) imidazolium chloride and metal precursors (Pt, Pd, Au).

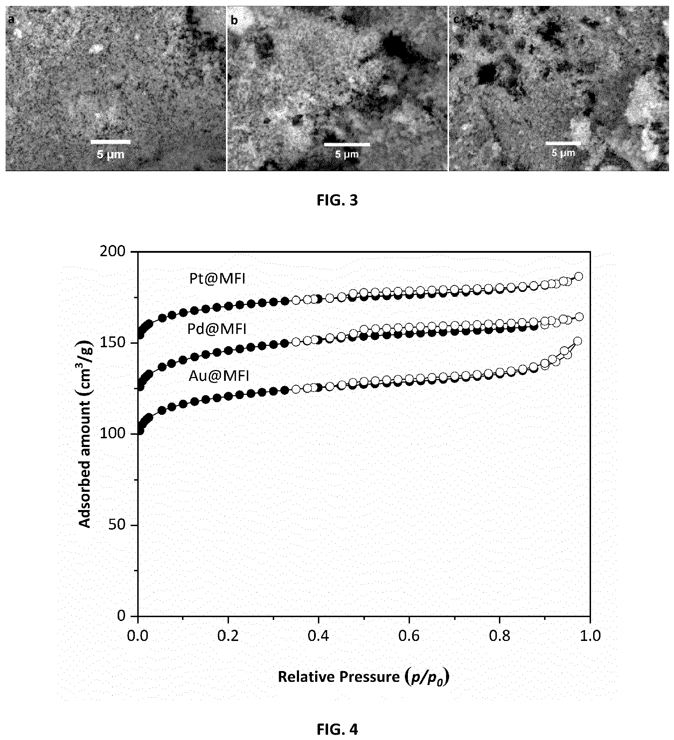

FIG. 3 shows SEM images of the a:Pt@MFI (Example 1), b:Pd@MFI (Example 2) and c:Au@MFI (Example 3) catalysts synthesized by hydrothermal crystallization assisted with 1-methyl-3-(triethoxysilyl propyl) imidazolium chloride and metal precursors (Pt, Pd, Au).
FIG. 4 shows nitrogen sorption isotherms of the Pt@MFI (Example 1), Pd@MFI (Example 2) and Au@MFI (Example 3) catalysts synthesized by hydrothermal crystallization in presence of 1-methyl-3-(triethoxysilyl propyl) imidazolium chloride. To clarify the data isotherms of Pt@MFI (Example 1) and Pd@MFI (Example 2) were moved vertically by 60 and 30 cm³g⁻¹, respectively.

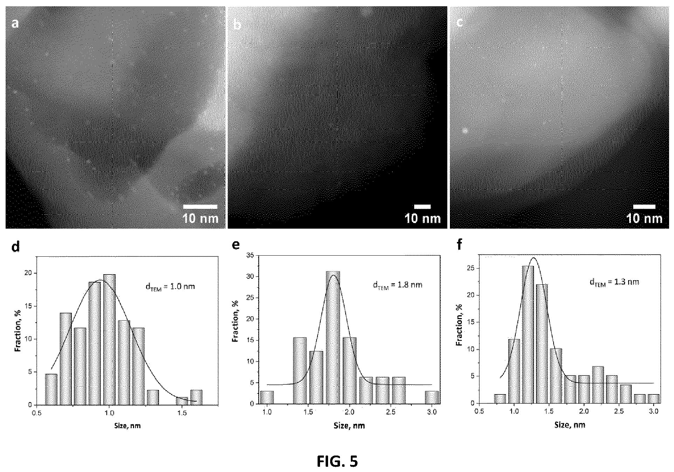

FIG. 5 shows STEM images and corresponding nanoparticle size distribution graphs of Pt@MFI (Example 1) (a,d), Pd@MFI (Example 2) (d,e) and Au@MFI (Example 3) (c,f) catalysts synthesized by hydrothermal crystallization in the presence of 1-methyl-3-(triethoxysilyl propyl)imidazolium chloride and metal precursors.

### Materials and Methods

¹H NMR spectra was recorded on a Varian UNITYINOVA 400 instrument. Chemical shifts are reported in ppm (δ) relative to tetramethylsilane (1H) and referenced to the solvent signal (δ): 4.75 ppm (D₂O). Coupling constants, J (in Hz) were obtained by the first-order analysis.

Products were analysed by X-ray powder diffraction method to confirm the MFI topology. X-ray diffractograms were obtained on a Bruker AXS-D8 Advance diffractometer with a graphite monochromator using Cu Kα radiation in Bragg-Brentano geometry.

Metal (Pt, Pd, Au) content of the MFI zeolite is analysed on scanning electron microscope LYRA 3 (Tescan) equipped with EDS analyser AZtec X-Max 20 (Oxford Instruments).

The morphology of products is determined by Scanning Electron Microscopy (SEM) using a TESCAN Vega Microscope using accelerating potential 15 kV, beam current 1 nA. Products have spherical particles with sizes ranging from 0.5 µm to 2 µm.

Textural properties of metal@MFI catalysts evaluated from nitrogen sorption isotherms using ASAP 2020 (Micromeritics) static volumetric apparatus at -196 °C. BET method was used to calculate surface area of catalysts using adsorption data in the range of relative pressures p/po = 0.05 - 0.2. The adsorbed amount at p/p₀ = 0.98 reflect the total adsorption capacity. The micropore volumes of products were obtained using standard Micromeritics software for cylindrical pores.

Size of metal nanoparticles in products of this invention was determined by Scanning Transmission Electron Microscopy (STEM) imaging using JEOL NeoARM 200F operated at 200 kV equipped with High Angle Annular Dark Field (HAADF) detector.

The present invention is further illustrated by the following examples which should not be construed as further limiting.

### Examples

A series of metal@MFI catalysts with different kind of metal nanoparticles (Pt, Pd, Au) were prepared according to the following general procedure. In Examples 1-3, metal@MFI catalysts were prepared from the reaction mixture as shown in Table 2.

### EXAMPLE 1

Metal precursor (21.3g of potassium tetrachloroplatinate(II)) was dissolved in deionized water, subsequently adding 0.33g of 1-methyl-3-(triethoxysilyl propyl) imidazolium chloride and the solution was left for two days at the 25 °C. The aqueous metal precursor dissolved in 1-methyl-3-(triethoxysilyl propyl) imidazolium chloride was mixed with the MFI-forming gel consisting of 0.19 g of aluminum nitrate nonahydrate, 6.25 g of tetraethyl orthosilicate, 0.14 g of sodium hydroxide, 3.84 g of tetrapropylammonium hydroxide solution and 3.58 g of water (left to age for 15 hours before mixing), and freeze-dried below -150 °C. This was followed by grinding the mixture into powder and transfer to a glass vial, loading the glass vial into a 90 ml Teflon-lined stainless-steel autoclave with 2 mL deionized water at the bottom for hydrothermal crystallization at 150 °C for 3 days. The catalysts were then separated by filtration and washed with 150 mL of distilled water (with portions of 30 ml) until the pH of the filtrate was below 8; followed by drying the product at 65 °C and calcining it in a furnace at 540 °C with a temperature rate 1 °C/min and with a heating time 6 hours.

### EXAMPLE 2

Metal precursor (27.2g of ammonium tetrachloropalladate(II)) was dissolved in deionized water, subsequently adding 0.33g of 1-methyl-3-(triethoxysilyl propyl) imidazolium chloride and the solution was left for two days at the 25 °C. The aqueous metal precursor dissolved in 1-methyl-3-(triethoxysilyl propyl) imidazolium chloride was mixed with the MFI-forming gel consisting of 0.19 g of aluminum nitrate nonahydrate, 6.25 g of tetraethyl orthosilicate, 0.14 g of sodium hydroxide, 3.84 g of tetrapropylammonium hydroxide solution and 3.58 g of water (left to age for 12 hours), and freeze-dried below -150 °C. This was followed by grinding the mixture into the powder and transfer to a glass vial, loading the glass vial into a 90 ml Teflon-lined stainless-steel autoclave with 2 mL deionized water at the bottom for hydrothermal crystallization at 150 °C for 3 days. The catalysts were then separated by filtration and washed with 150 ml of distilled water (with portions of 30 mL) until the pH of the filtrate was below 8; followed by drying the product at 65 °C and calcining it in a furnace at 540 °C with a temperature rate 1 °C/min and with a heating time 6 hours.

### EXAMPLE 3

Metal precursor (20.2g of sodium tetrachloroaurate(III) dihydrate) was dissolved in deionized water, subsequently adding 0.33g of 1-methyl-3-(triethoxysilyl propyl) imidazolium chloride and the solution was left for two days at the 25 °C. The aqueous metal precursor dissolved in 1-methyl-3-(triethoxysilyl propyl) imidazolium chloride was mixed with the MFI-forming gel consisting of 0.19 g of aluminum nitrate nonahydrate, 6.25 g of tetraethyl orthosilicate, 0.14 g of sodium hydroxide, 3.84 g of tetrapropylammonium hydroxide solution and 3.58 g of water (left to age for 12 hours) and freeze-dried below -150 °C. This was followed by grinding the mixture into the powder and transfer to a glass vial, loading the glass vial into a 90 mL Teflon-lined stainless-steel autoclave with 2 mL deionized water at the bottom for hydrothermal crystallization at 150 °C for 3 days. The catalysts were then separated by filtration and washed with 150 mL of distilled water (with portions of 30 mL) until the pH of the filtrate was below 8; followed by drying the product at 65 °C and calcining it in a furnace at 540 °C with a temperature rate 1 °C/min and with a heating time 6 hours.

**TABLE 2**

| | Metal precursor | Metal precursor amount [mg] | Ionic liquid¹ [g] | Deionized water [g] | MFI forming gel² [g] |
|---|---|---|---|---|---|
| EXAMPLE 1 | K₂PtCl₄ | 21.3 | 0.33 | 30 | 14 |
| EXAMPLE 2 | (NH₄)₂PdCl₄ | 27.2 | 0.33 | 30 | 14 |
| EXAMPLE 3 | NaAuCl₄ | 20.2 | 0.33 | 30 | 14 |

| | | | | | |
|---|---|---|---|---|---|
| ¹ 1-methyl-3-(triethoxysilyl propyl) imidazolium chloride ² 0.19 g of aluminum nitrate nonahydrate, 6.25 g of tetraethyl orthosilicate, 0.14 g of sodium hydroxide, 3.84 g of tetrapropylammonium hydroxide solution and 3.58 g of water | | | | | |

The final metal loadings in the prepared products were: Pt 0.40 wt% for Example 1, Pd 0.53 wt% for Example 2, Au 0.50 wt% for Example 3. Physical properties of the products obtained with different metal nanoparticles in Example 1, Example 2, and Example 3 are shown in Table 3:

**TABLE 3**

| | Name | *S*_{BET} (m²/g) | *V*_{mic} (cm³/g) | *V*ₜₒₜ (cm³/g) |
|---|---|---|---|---|
| Example 1 | Pt@MFI | 383 | 0.14 | 0.20 |
| Example 2 | Pd@MFI | 404 | 0.13 | 0.21 |
| Example 3 | Au@MFI | 420 | 0.15 | 0.23 |

### EXAMPLES 4-7

In all Examples 4-7, Pt@MFI catalysts with different amount of Pt were prepared from a reaction mixtures as in Table 4.

Metal precursor (potassium tetrachloroplatinate(II), amounts are listed in Table 4.) was dissolved in deionized water, subsequently adding 1-methyl-3-(triethoxysilyl propyl) imidazolium chloride (amounts are listed in Table 4.), and the solution was left for two days at the 25 °C. The aqueous metal precursors dissolved in 1-methyl-3-(triethoxysilyl propyl) imidazolium chloride was mixed with the MFI-forming gel (consisting of 0.19 g of aluminum nitrate nonahydrate, 6.25 g of tetraethyl orthosilicate, 0.14 g of sodium hydroxide, 3.84 g of tetrapropylammonium hydroxide solution and 3.58 g of water, and left to age for at least 6 hours) and freeze-dried below -150 °C. This was followed by grinding the mixture into powder and transfer to a glass vial, loading the glass vial into a 90 ml Teflon-lined stainless-steel autoclave with 2 mL deionized water at the bottom for hydrothermal crystallization at 150 °C for 3 days. The catalysts were then separated by filtration and washed with 150 mL of distilled water (with portions of 30 ml) until the pH of the filtrate was below 8; followed by drying the product at 65 °C and calcining it in a furnace at 540 °C with a temperature rate 1 °C/min and with a heating time 6 hours.

**TABLE 4**

| | K₂PtCl₄ [mg] | Ionic liquid¹ [g] | Deionized water [g] | MFI forming gel² [g] |
|---|---|---|---|---|
| EXAMPLE 4 | 7.4 | 0.12 | 11 | 14 |
| EXAMPLE 5 | 10.6 | 0.17 | 25 | 14 |
| EXAMPLE 6 | 42.6 | 0.60 | 60 | 14 |
| EXAMPLE 7 | 63.9 | 0.92 | 90 | 14 |

| | | | | |
|---|---|---|---|---|
| ¹ 1-methyl-3-(triethoxysilyl propyl) imidazolium chloride ² MFI forming gel consisted of: 0.19 g of aluminum nitrate nonahydrate, 6.25 g of tetraethyl orthosilicate, 0.14 g of sodium hydroxide, 3.84 g of tetrapropylammonium hydroxide solution and 3.58 g of water. | | | | |

Platinum loadings achieved in the products are listed in the Table 5:

| | Platinum loading [wt%] |
|---|---|
| EXAMPLE 4 | 0.30 |
| EXAMPLE 5 | 0.54 |
| EXAMPLE 6 | 0.83 |
| EXAMPLE 7 | 1.14 |

### EXAMPLES 8-10

In all Examples 8-10, Pt@MFI catalysts with different Si/Al ratio were prepared from a reaction mixture as in Table 6.

Metal precursor (21.3 g of potassium tetrachloroplatinate(II) was dissolved in deionized water, subsequently adding 0.33 g of 1-methyl-3-(triethoxysilyl propyl) imidazolium chloride, and the solution was left for two days at 25 °C. The aqueous metal precursor dissolved in 1-methyl-3-(triethoxysilyl propyl) imidazolium chloride was mixed with the MFI-forming gel (consisted of X g of aluminum nitrate nonahydrate, Y g of tetraethyl orthosilicate, 0.14 g of sodium hydroxide, 3.84 g of tetrapropylammonium hydroxide solution and 3.58 g of water, the amount of X and Y according to Table 5 and left to age for at least 6 hours) and freeze-dried below - 150 °C. This was followed by grinding the mixture into the powder and transfer to a glass vial, loading the glass vial into a 90 ml Teflon-lined stainless-steel autoclave with 2 mL deionized water at the bottom for hydrothermal crystallization at 150 °C for 3 days. The catalysts were then separated by filtration and washed with 150 mL of distilled water (with portions of 30 ml) until the pH of the filtrate was below 8; followed by drying the product at 65 °C and calcining it in a furnace at 540 °C with a temperature rate 1 °C/min and with a heating time 6 hours.

**TABLE 6**

| | K₂PtCl₄ [mg] | Ionic liquid¹ [g] | Deionized water [g] | MFI-forming gel [g]² | MFI-forming gel contents [g] | | MFI-forming gel molar ratio | |
|---|---|---|---|---|---|---|---|---|
| | | | | | SiO₂ | Al₂O₃ | SiO₂ | Al₂O₃ |
| EXAMPLE 8 | 21.3 | 0.33 | 30 | 14 | 6.44 | 0 | 1 | 0 |
| EXAMPLE 9 | 21.3 | 0.33 | 30 | 14 | 6.38 | 0.06 | 1 | 0.0025 |
| EXAMPLE 10 | 21.3 | 0.33 | 30 | 14 | 5.91 | 0.53 | 1 | 0.025 |

| | | | | | | | | |
|---|---|---|---|---|---|---|---|---|
| ¹ 1-methyl-3-(triethoxysilyl propyl) imidazolium chloride ² MFI-forming gel consisted of X g of aluminum nitrate nonahydrate, Y g of tetraethyl orthosilicate, 0.14 g of sodium hydroxide, 3.84 g of tetrapropylammonium hydroxide solution and 3.58 g of water, the amount of X and Y according to Table 5. | | | | | | | | |

## Claims

1. A method for preparation of MFI zeolites with encapsulated metal nanoparticles, wherein the metal is selected from Pt, Pd, Au and mixtures thereof, said method comprising the following steps:
a) contacting at least one metal salt or complex, wherein the metal is selected from Pt, Pd, Au and mixtures thereof, with an alkoxysilane functionalized ionic liquid, in aqueous solvent, to form a first mixture;
b) contacting a source of silica, alkali metal hydroxide, a structure-directing agent and optionally a source of alumina,, in aqueous solvent, to form a second mixture;
c) combining the first mixture and the second mixture to form a third mixture;
d) subjecting the third mixture to drying;
e) subjecting the dried third mixture to hydrothermal crystallization to form the MFI zeolites with encapsulated metal nanoparticles.

2. The method according to claim 1, wherein the metal salt or complex is selected from potassium tetrachloroplatinate(II), chloroplatinic acid, ammonium hexachloroplatinate(IV), ammonium tetrachloroplatinate(II), sodium hexachloroplatinate(IV), sodium tetrachloroplatinate(II), ammonium tetrachloropalladate(II), sodium tetrachloropalladate(II), ammonium hexachloropalladate(IV), potassium tetrachloropalladate(II), sodium tetrachloropalladate(II), potassium hexachloropalladate(IV), potassium hexachloropalladate(IV); sodium tetrachloroaurate(III), gold(III) chloride, potassium tetrachloroaurate(III), potassium tetrabromoaurate(III), ammonium tetrachloroaurate(III), and hydrates and/or solvates thereof.

3. The method according to any one of the preceding claims, wherein the alkoxysilane functionalized ionic liquid is an ionic liquid comprising a cation selected from:
- imidazolium ion of formula (I) 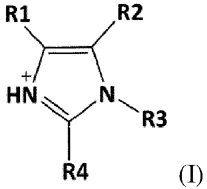 wherein each of R1-R4 is independently selected from C1-C6 alkyls;
- ammonium ion of formula (II) 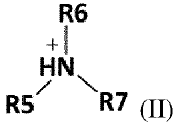 wherein each of R5-R7 is independently selected from C1-C6 alkyls;
- guanidinium ion of formula (III) 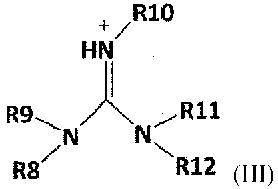 wherein each of R8-R12 is independently selected from C1-C6 alkyls;
and
- an anion of formula (IV), 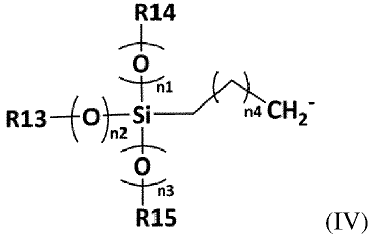 wherein each of R13, R14, R15 is independently selected from C1-C6 alkyls, each of n1, n2, n3 is 0 or 1, wherein at least one of n1, n2, n3 is 1, and n4 is an integer from 0 to 5.

4. The method according to any one of the preceding claims, wherein in step a), the contacting of at least one metal salt or complex, wherein the metal is selected from Pt, Pd, Au, with an alkoxysilane functionalized ionic liquid is carried out in water as the aqueous solvent, in molar ratio of metal salt(s) or complex(es) : alkoxysilane functionalized ionic liquid : water = 0.35-3 : 7-60 : 1230-10000.

5. The method according to any one of the preceding claims, wherein in step b), the source of silica, optionally the source of alumina, the structure-directing agent and the alkali metal hydroxide are combined in water as the aqueous solvent, in molar ratios within the following ranges: source of silica : source of alumina : sodium hydroxide : structure-directing agent : water = 1 : 0-0.2 : 0.02-0.10 : 0.1-0.4 : 1-300.

6. The method according to any one of the preceding claims, wherein between the steps of formation of the first mixture and of the second mixture and the step of combining the two mixtures to form a third mixture is a delay of at least 6 hours.

7. The method according to any one of the preceding claims, wherein the first mixture and the second mixture are combined in the weight ratio in the range of 0.01 to 100.

8. The method according to any one of the preceding claims, wherein in step c), the third mixture is stirred for 2 to 10 hours, preferably at a temperature within the range of 20-40 °C.

9. The method according to any one of the preceding claims, wherein after drying step d) and prior to hydrothermal crystallization step e), the third mixture is ground to a powder, preferably with particle size D90 NMT 200 µm.

10. The method according to any one of the preceding claims, wherein in the hydrothermal crystallization step e), the dried third mixture is kept at a temperature within the range of 140 °C to 170 °C, under autogenic pressure for at least 24 hours, preferably for 2 to 6 days.

11. The method according to any one of the preceding claims, wherein the alkoxysilane functionalized ionic liquid is prepared prior to step a) by reacting a quaternizable amine selected from
- imidazole derivative of formula (Ia) 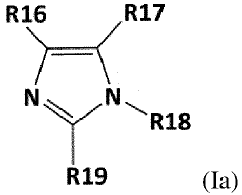 wherein each of R16-R19 is independently selected from C1-C6 alkyls,
- tertiary amine of formula (IIa) 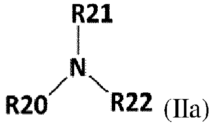 wherein each of R20-R22 is independently selected from C1-C6 alkyls,
- guanidine derivative of formula (IIIa) 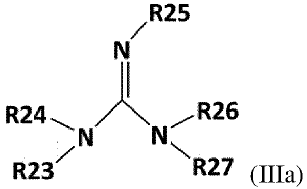 wherein each of R23-R27 is independently selected from C1-C6 alkyls;
with an alkoxysilanealkyl halide of formula (IVa) 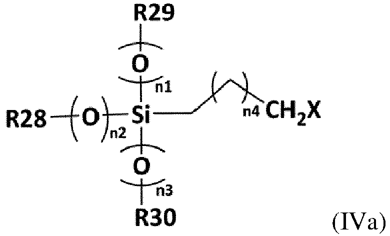
wherein each of R28-R30 is independently selected from C1-C6 alkyls,
each of n1, n2, n3 is 0 or 1, wherein at least one of n1, n2, n3 is 1,
n4 is an integer from 0 to 5,
and X is selected from Cl, Br, I, F (preferably from Cl and Br).

12. The method according to claim 11, wherein the reaction of preparation of the ionic liquid is carried out under inert atmosphere at 60 to 90 °C for 12 to 36 hours, followed by precipitation in diethyl ether at temperature range from 10 to 20 °C, then drying in a vacuum oven at pressure range from 1 kPa to 50 kPa, at temperature range from 20 to 40 °C for 12 to 24 hours.
